# EUROPEAN PATENT SPECIFICATION

(11) **EP 0 416 753 B1**
(45) Date of publication and mention of the grant of the patent: **06.04.1994**
(21) Application number: 90308704.7
(22) Date of filing: 08.08.1990
(51) Int. Cl.: B60T 11/16

(54) **Recuperation in master cylinder**
Rekuperation bei Hauptzylindern
Récupération à maîtres cylindres

(30) Priority: 25.08.1989 GB 8919364
(43) Date of publication of application: 13.03.1991
(73) Proprietor: WABCO AUTOMOTIVE U.K. LIMITED, Rugby, Warwickshire, CV21 2NL (GB)
(72) Inventor: Keegan, Colm Michael Patrick, Nettleham, Lincoln, 1N2 2PN (GB)
(74) Representative: Chettle, Adrian John

(56) References cited:
- EP-A- 0 181 761
- DE-A- 1 680 211
- DE-C- 858 621
- GB-A- 2 183 747
- US-A- 2 571 538

## Description

This invention relates to a master cylinder for hydraulic systems for example, braking systems and, more particularly, to the provisions of recuperation in such systems. British Patent specification No. 1,333.050 relates to a hydraulic booster comprising a pedal actuated master cylinder, a power valve and a boost cylinder and a later patent specification No. 1,468,014 describes a version of the booster adapted to anti-lock operation by the addition of solenoid valves and another boost cylinder.

In such systems, recuperation is required in the pedal released condition to allow the braking (or clutch) system to self-bleed i.e. any air bubbles that may be present in the fluid are allowed to travel upwards to the reservoir. Recuperation may also be necessary to prevent a vacuum being induced in the braking circuit by the master cylinder on its return stroke in the event of a slight fluid loss from the brake circuit or when bleeding the brake circuit.

Recuperation may also be required in the event of expansion of the fluid in the system to ensure full release of pressure in the pedal released condition. It has been found that anti-lock operation introduces new conditions of operation that can result in problems using conventional recuperation means.

EP-A-0181761 discloses a master cylinder according to the preamble of claim 1, in which the piston is arranged such it can be withdrawn from the cylinder bore at least to the extent of providing a recuperation flowpath past a sealing means between the piston and the bore. The sealing means comprises a sealing ring which is carried on the piston and is radially and axially floating (i.e. has a controlled amount of radial and axial movement with respect to the piston). So that the piston can be withdrawn from the bore while retaining accurate alignment with it, alignment means are provided in the form of a bearing ring disposed between the seal and the leading end of the piston, the sealing ring being confined with limited axial clearance between the bearing ring on the one hand and a shoulder on the piston on the other.

With the floating seal disposed between the piston shoulder and the bearing ring which maintains the piston in alignment with the bore, the seal can align itself with and seal on the cylinder bore and can seal also against the supporting shoulder of the piston to generate hydraulic pressure in the cylinder during the upstroke.

During the piston return stroke, negative pressure may be generated and to allow recuperation in this mode the bearing ring has therethrough at least one flowpath in communication with the radial clearance between the piston and the floating seal. A recuperation flowpath is therefore available through the bearing ring, the annular gap between the piston and the seal and the axial gap between the shoulder of the piston and rear face of the piston seal produced as the piston reverses direction, into a space communicating with the fluid reservoir.

Normally the pressure in the cylinder is sufficient to hold the seal against the piston sealing shoulder, in addition to acting on the inside of the seal to push it out against the cylinder. The seal is thus prevented from leaking. However, in the event that the cylinder pressure is low, it is possible, on the return stroke, for the friction of the seal against the cylinder to overcome the force generated by the pressure over the annulus between the sealing diameter on the cylinder and that on the piston, so that the axially floating seal may be pulled away from the sealing shoulder on the piston, to the extent that if the piston direction is rapidly reversed fluid may escape between the seal and the piston. This may occur, for example during anti-lock brake operation.

In a master cylinder of the type to which our EP-A-0181761 relates having a chamber in the cylinder housing with an inlet for connection to a source of fluid, and wherein at the end of the return stroke the piston can be withdrawn from the cylinder bore into the chamber at least to the extent of providing past the seal a recuperation flow path between the cylinder bore and the source of hydraulic fluid, the axially and also preferably radially floating sealing means typically a PTFE sealing ring with a reinforcing girdle, is disposed between the said sealing surface on the piston and a bearing ring slidably mounted on the piston and running in the bore so as, at all times to maintain alignment of the piston with the bore. A spring loading or other bias may conveniently act upon the bearing ring which then transmits the force to the seal so urging it into contact with the piston sealing surface.

The level of spring loading or other bias applied to the sealing ring is predetermined; it is selected to ensure that the seal can leave the piston only when the cylinder pressure is less than reservoir pressure, so that fluid cannot pass from the cylinder to the reservoir so long as the seal is engaged in the cylinder, but it can be arranged so that at a certain depression in the cylinder, the depression acts over the annulus between the sealing diameter on the cylinder and the sealing diameter on the piston, and in conjunction with the friction of the seal against the cylinder on the return stroke, the biassing spring load is overcome, so that fluid can pass into the cylinder from the reservoir.

At normal temperatures the sealing means which is stated preferably comprises a sealing ring of PTFE or similar material is an interference fit within the cylinder bore and will seal without the need to expand the seal. However, at very low temperature there is a tendency for the seal to contract more than the cylinder, which may give rise to leakage.

Particularly, though not exclusively, for this reason we also propose in accordance with this invention, expanding the seal to assist initial interference of the seal with the cylinder. The force required to expand the seal may be derived from an initial surge of pressure upon entry of the seal into the bore or from means located within the seal to provide a radially directed biasing force or from spring loading of the seal as described above or from a combination of these variants.

Embodiments of the present invention will now be described by way of example with reference to the accompanying drawings in which:
Figure 1 is a part cross-sectional view of a typical master cylinder according to the present invention;
Figure 2 shows schematically a detail of a master cylinder incorporating a coiled spring loaded seal; and
Figures 3 to 5 each show schematically a detail; of a master cylinder similar to that of Figure 1.
Figure 6 shows, to an enlarged scale, the sealing of figure 5 having a barrel-shaped lip or rim; and
Figure 7 shows schematically an arrangement similar to figure 5 but wherein the sealing ring is biased radially outwardly

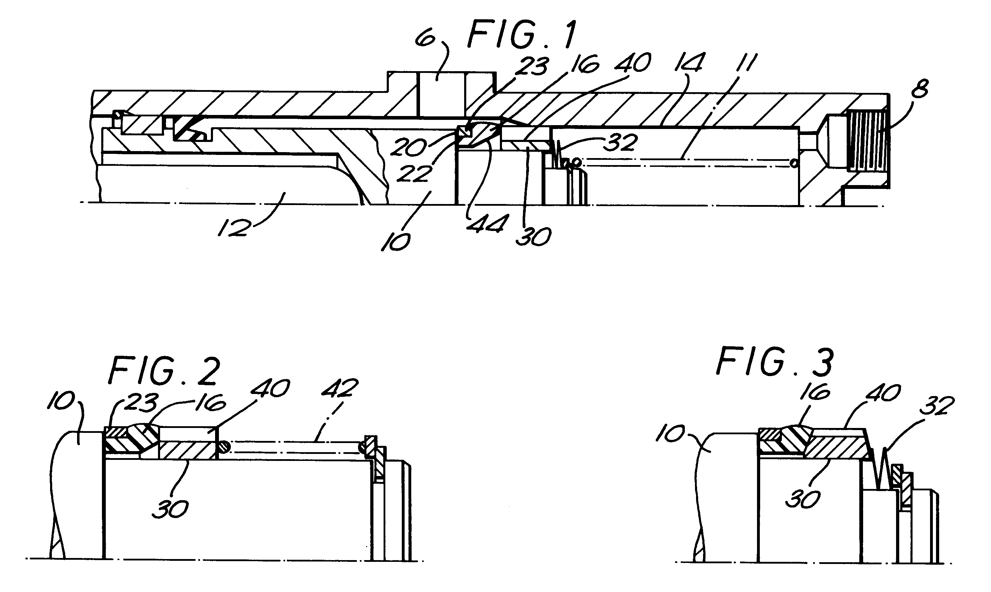

Figure 1 shows a typical master cylinder having a piston 10 working against a piston return spring 11 in a cylinder bore 14, a delivery port 8 for connection to a braking system and an inlet port 6 in communication with a reservoir for hydraulic fluid.

When the brake pedal of a vehicle is depressed, the master cylinder piston 10 is moved by rod 12 or other mechanical input, into the master cylinder bore 14 and the floating seal, 16 which has a free diameter slightly greater than the bore 14, after a predetermined free travel contacts the bore, being guided by a lead chamfer 18 on the bore. The seal 16 seals against the bore 14 and also by its back face 20, against a shoulder 22 on the piston, the friction on the seal being sufficient to make the seal contact the shoulder. As the piston continues to enter the bore the pressure in the cylinder bore 14 begins to rise, at a rate depending on the compliance of the system to which it is attached and this pressure acts on the seal 16 tending to push it through the axial gap which still exists between the start of the bore and the shoulder 22 of the piston.

To prevent the seal from being pushed through the gap, it is first of all made of a relatively stiff sealing material such as PTFE, and secondly is reinforced by a band or girdle 23 of rigid material such as steel or possibly of a fibre and/or plastics material, of high tensile strength and stiffness. The girdle 23 supports the seal 16 radially to prevent extrusion through the gap and also axially to prevent it being crushed against the piston shoulder 22 at high pressures, but allowing it to seal against the shoulder.

The piston is maintained in accurate alignment with the cylinder bore even when the seal is withdrawn from the bore, by a bearing ring 30 slidably mounted on the piston, the seal 16 being disposed between the bearing ring 30 and the shoulder 22.

A stack of low-rate disc springs 32 disposed around an end portion 34 of the piston 10 and retained by a circlip 36 and washer 38, acts on the end of the bearing ring 30 urging it axially into contact with the sealing ring 16 so as to lead the sealing ring 16 against the shoulder 22 with a predetermined force. The sealing ring 16 thus maintains a seal with the shoulder 22 even during the return stroke when the pressure in the cylinder is low. It will, however, lift from the shoulder 22 when a negative pressure sufficient in combination with the friction of the seal against the cylinder during the return stroke, is generated to allow recuperation via the axial clearance created between the back face of the sealing ring 16 and the shoulder 22, the annular gap 24 between the piston 10 and the sealing ring 16 and axial slots 40 around the outer circumference of the bearing ring 30.

Where length of the master cylinder is not a critical design consideration a coil spring 42 may be used for spring loading the sealing ring 16 as shown in Figure 2.

The sealing ring shown in Figures 1, 2 and 4 has an internal chamfer or counterbore 44 communicating the radial gap between the ring and the piston 10 with the axial slots around the circumference of the bearing ring 30. At entry of the seal within the bore therefore, the initial build-up of pressure acts within the seal tending to expand the seal and assist initial interference of the seal within the bore. This effect can be further enhanced by designing the seal so as more readily to expand in the radial direction when subject to internal pressure (see for example, Figure 6). Providing the seal diameter is at least equal to the cylinder diameter, then sufficient pressure is generated on initial entry of the seal to the bore, to expand the seal into leaktight contact with the cylinder.

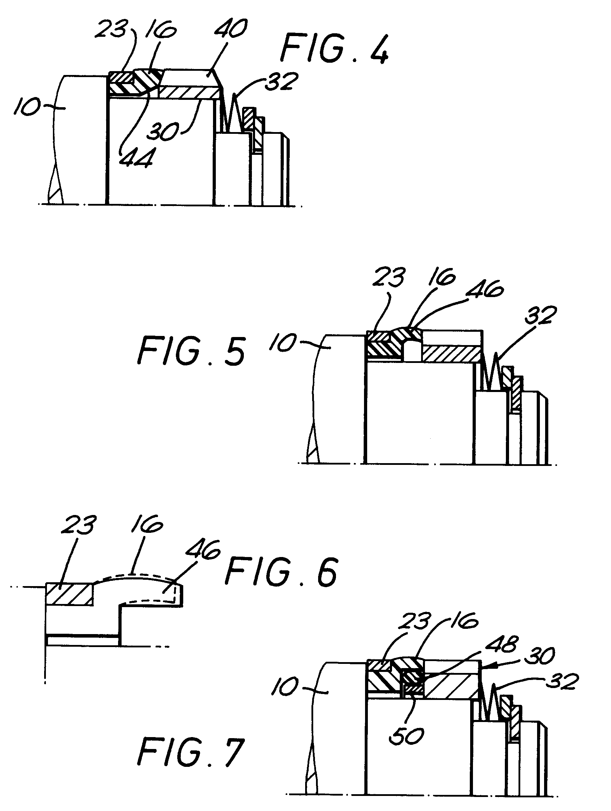

Initial radial expansion of the seal to assist interference with the bore can also be achieved by means of the spring loading. Figures 3 and 4 show an arrangement wherein the abutting surfaces of the bearing ring 30 and sealing ring 16 are inclined and an angle α to a plane normal to the axis of the piston. Thus in addition to the axial force tending to urge the sealing ring 16 against the shoulder 22, there is a component of the spring loading tending to deflect or expand the sealing ring 16 radially. In the embodiment of Figure 5 and 6 the sealing ring 16 has a barrel-shaped lip or rim 46 against which the (normal) force of the bearing ring abuts and which is designed to bow (radially) outwardly in response to purely axial loading. Also, the pressure of fluid generated within the barrel-shaped lip or rim 46 via the axial slots 40 in the bearing 30, on initial entry of the seal 16 in the bore, augments expansion of the seal 16 in response to the axial loading.

In the embodiment of Figure 7 the sealing ring is biased outwardly in the radial direction by an O-ring 48 disposed within the barrel-shaped lip 46. The O-ring is a conventional means of providing a radial expanding force, except that in this arrangement the O-ring 48 does not seal against the piston 10, neither does it locate on the piston 10, but is constrained on its inside diameter to sit on a floating annular (metal) ring 50, thus allowing the sealing ring 16 to float radially and to move axially as required for "down the bore" recuperation as previously described.

## Claims

1. A master cylinder of the kind in which at the end of the return stroke the piston is withdrawn from the bore at least to the extent of providing past the sealing means a recuperation flowpath between the working bore and a source of hydraulic fluid, the master cylinder comprising a cylinder housing (5) defining a working bore (14); a piston (10) slidably received in the bore to perform forward and return strokes; a bearing ring (30) around said piston and to centralize the piston in said bore (14), said bearing ring (30) defining with a shoulder (20) of said piston an annular space; and sealing means (16) in said space and providing a seal between the piston (10) and said bore (14), the sealing means (16) being movable axially with respect to said piston (10), and floating radially with respect to the piston (10) to define a radial gap (24) therebetween, characterized in that said bearing ring (30) is slidable along said piston, and the master cylinder further includes biasing means (32) to urge said bearing ring towards said shoulder (20), thereby to urge said sealing means (16) into sealing contact with said shoulder (20).

2. A master cylinder according to claim 1 wherein the sealing means (16) is radially expansible in response to said biasing means (32).

3. A master cylinder according to claim 2 wherein the sealing means (16) comprises a barrel shaped annular portion or lip (46) adapted to deflect radially outwardly in response to said biasing means (32).

4. A master cylinder according to claim 2 wherein abutting surfaces of the bearing ring (30) and sealing means (16) are inclined to a plane normal to the axis of the piston (10).

5. A master cylinder according to any preceding claim wherein the bearing ring (30) comprises at least one flowpath between the cylinder bore (10) and said radial gap (24), the sealing means (16) being radially expansible in response to fluid pressure acting within said gap (24).

6. A master cylinder according to any preceding claim wherein the sealing means (16) is biased radially outwardly by a resilient O-ring (48) located within said gap (24) and itself seated on a floating annular ring (50).

7. A master cylinder according to any preceding claim wherein said biasing means (32) acts between said bearing ring (30) and said piston (10).

8. A master cylinder according to any preceding claim wherein said sealing means (16) has a reinforcing girdle (22) at the opposite side to said bearing ring (30).

## Patentansprüche

1. Hauptzylinder der Bauart, bei der am Ende des Rückhubs der Kolben zumindest in dem Ausmaß aus der Bohrung zurückgezogen wird, daß an der Dichtungseinrichtung vorbei ein Rekuperations-Strömungsweg zwischen der Arbeitsbohrung und einer Hydraulikfluidquelle entsteht, mit einem Zylindergehäuse (5), das eine Arbeitsbohrung (14) ausbildet, einem Kolben (10), der verschieblich in der Bohrung aufgenommen ist, um Vor- und Rückhübe auszuführen, einem Lagerring (30), der um den Kolben angeordnet ist und den Kolben in der Bohrung (14) zentriert, wobei der Lagerring (30) mit einer Schulter (22) des Kolbens einen ringförmigen Raum bildet, und einer Dichtungseinrichtung (16), die in dem Raum angeordnet ist und eine Abdichtung zwischen dem Kolben (10) und der Bohrung (14) schafft, wobei die Dichtungseinrichtung (16) in Axialrichtung in bezug auf den Kolben (10) beweglich und in Radialrichtung in bezug auf den Kolben (10) frei beweglich ist, um zwischen sich und dem Kolben (10) einen radialen Spalt (24) zu schaffen, dadurch gekennzeichnet, daß der Lagerring (30) längs des Kolbens verschieblich ist und daß der Hauptzylinder des weiteren eine Vorspanneinrichtung (32) aufweist, um den Lagerring in Richtung auf die Schulter (22) zu drücken, wodurch die Dichtungseinrichtung (16) in abdichtende Anlage mit der Schulter (22) gedrückt wird.

2. Hauptzylinder nach Anspruch 1, bei dem die Dichtungseinrichtung (16) als Reaktion auf die Vorspanneinrichtung (32) in Radialrichtung ausdehnbar ist.

3. Hauptzylinder nach Anspruch 2, bei dem die Dichtungseinrichtung (16) einen abgerundet-zylinderförmigen ringförmigen Abschnitt oder eine abgerundet-zylinderförmige ringförmige Lippe (46) aufweist, der bzw. die in Reaktion auf die Vorspanneinrichtung (32) sich radial auswärts verformt.

4. Hauptzylinder nach Anspruch 2, bei dem aneinander anliegende Oberflächen des Lagerrings (30) und der Dichteinrichtung (16) zu einer zur Achse des Kolbens (10) normalen Ebene geneigt sind.

5. Hauptzylinder nach einem der vorangehenden Ansprüche, bei dem der Lagerring (30) zumindest einen Strömungsweg zwischen der Zylinderbohrung (40) und dem radialen Spalt (24) aufweist, wobei die Dichteinrichtung (16) in Reaktion auf den innerhalb des Spalts (24) wirkenden Fluiddruck in Radialrichtung ausdehnbar ist.

6. Hauptzylinder nach einem der vorangehenden Ansprüche, bei dem die Dichteinrichtung (16) durch einen elastischen O-Ring (48), der innerhalb des Spalts (24) angeordnet ist und seinerseits auf einem frei beweglichen kreisförmigen Ring (50) sitzt, in Radialrichtung auswärts vorgespannt ist.

7. Hauptzylinder nach einem der vorangehenden Ansprüche, bei dem die Vorspanneinrichtung (32) zwischen dem Lagerring (30) und dem Kolben (10) wirkt.

8. Hauptzylinder nach einem der vorangehenden Ansprüche, bei dem die Dichtungseinrichtung (16) an ihrer dem Lagerring (30) abgewandten Seite einen Verstärkungsgurt (23) aufweist.

## Revendications

1. Maître cylindre du type dans lequel, à la fin de la course de retour, le piston est retiré de l'alésage au moins sur la distance permettant d'obtenir, au delà du moyen d'étanchéité, un chemin de passage de récupération entre l'alésage de travail et une source de fluide hydraulique, le maître cylindre comprenant un carter de cylindre (5) définissant un alésage de travail (14) ; un piston (10) monté en glissement à l'intérieur de l'alésage pour effectuer des courses vers l'avant et des courses de retour ; une bague de support (30) placée autour du piston pour centrer ce piston dans l'alésage (14), cette bague de support (30) définissant un espace annulaire avec un épaulement (20) du piston ; et un moyen d'étanchéité (16) placé dans cet espace pour former un joint d'étanchéité entre le piston (10) et l'alésage (14), le moyen d'étanchéité (16) pouvant se déplacer axialement par rapport au piston (10) et pouvant flotter radialement par rapport à ce piston (10) pour définir un intervalle radial (24) entre les deux, caractérisé en ce que la bague de support (30) peut glisser le long du piston, et en ce que le maître cylindre comprend en outre un moyen de poussée (32) pour pousser la bague de support vers l'épaulement (20), de manière à pousser le moyen d'étanchéité (16) en contact d'étanchéité avec l'épaulement (20).

2. Maître cylindre selon la revendication 1, caractérisé en ce que le moyen d'étanchéité (16) peut se dilater radialement sous l'action du moyen de poussée (32).

3. Maître cylindre selon la revendication 2, caractérisé en ce que le moyen d'étanchéité (16) comprend une partie annulaire ou lèvre en forme de cylindre (46) destinée à être déviée radialement vers l'extérieur sous l'action du moyen de poussée (32).

4. Maître cylindre selon la revendication 2, caractérisé en ce que les surfaces de butée de la bague de support (30) et du moyen d'étanchéité (16) sont inclinées par rapport à un plan perpendiculaire à l'axe du piston (10).

5. Maître cylindre selon l'une quelconque des revendications précédentes, caractérisé en ce que la bague de support (30) comprend au moins un chemin de passage entre l'alésage de cylindre (10) et l'intervalle radial (24), le moyen d'étanchéité (16) pouvant se dilater radialement sous l'action d'une pression de fluide agissant à l'intérieur de l'intervalle (24).

6. Maître cylindre selon l'une quelconque des revendications précédentes, caractérisé en ce que le moyen d'étanchéité (16) est poussé radialement vers l'extérieur par un joint torique élastique (48) placé dans l'intervalle (24) et s'appuyant lui-même sur une bague annulaire flottante (50).

7. Maître cylindre selon l'une quelconque des revendications précédentes, caractérisé en ce que le moyen de poussée (32) agit entre la bague de support (30) et le piston (10).

8. Maître cylindre selon l'une quelconque des revendications précédentes, caractérisé en ce que le moyen d'étanchéité (16) comporte une ceinture de renforcement (22) du côté opposé à la bague de support (30).
